(19) Europäisches Patentamt / European Patent Office / Office européen des brevets

(11) **EP 2 581 635 A1**

(12) **EUROPEAN PATENT APPLICATION**

(43) Date of publication:
**17.04.2013 Bulletin 2013/16**

(51) Int Cl.:
**F16K 41/10** *(2006.01)*

(21) Application number: **11185294.3**

(22) Date of filing: **14.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Vetco Gray Controls Limited Bristol BS48 1BS (GB)**

(72) Inventors:
• **Borchgrevink, Christian**
 **0402 Oslo (NO)**
• **Flidh, Jon**
 **3050 Mjøndalen (NO)**

(74) Representative: **Emerson, Peter James et al**
 **Page Hargrave**
 **Whitefriars**
 **Lewins Mead**
 **Bristol BS1 2NT (GB)**

(54) **Seals**

(57)     A gate valve (10) is disclosed comprising: a body (11) with a chamber (18); a flow passage (12) having an axis and extending through and having a counterbore intersecting the chamber; an annular seat (20) carried in the counterbore, the seat having an outward facing seal face; a gate (14) in the chamber having an engaging face that slidingly engages the seal face on the seat while being moved between open and closed positions of the valve; a stem (40) operably connected to the gate to move the gate between open and closed positions of the valve; a housing (32) having an internal wall (36) and enclosing at least a portion of the stem; and a fluid filled seal chamber (44, 54) enclosing at least a portion of the stem and located within the housing, wherein a volume (64) comprising a volume between the seal chamber and the stem remains constant during operation.

Fig. 2

EP 2 581 635 A1

**Description**

**Field of the Invention**

This invention relates in general to seals, such as a dynamic seal for a rising stem valve.

**Background of the Invention**

Rising stem valves, such as rising stem gate valves, are typically used when a straight-line flow of fluid and minimum flow restriction are required. They may be used in Christmas trees used for oil and gas extraction. For rising stem gate valves, typically, the valve has a body with a chamber in the form of a cavity and a flow passage extending through the body and intersecting the cavity to allow flow through the valve. When the valve is wide open, the gate is drawn into an end of the valve cavity away from the flow passage. The flow passage is typically the same size as the pipe in which the valve is installed.

A typical gate valve used in connection with oil and gas production has a flow passage that intersects a central cavity in the valve. Seat rings are placed in counterbores formed in the flow passage at the intersection of the flow passage with the cavity of the valve. An obstruction in the form of a gate is moved past the seats between open and closed positions of the valve.

The seats generally have seals which seal them to the counterbores of the flow passage. These seals are typically elastomeric seals and when located on the downstream seat prevent the entry of fluid from the central cavity of the body to the downstream flow passage. Seals located on the upstream seat can act as a check valve to fluid flow. For gate valves designed with unidirectional sealing when the valve is closed, fluid will flow past the upstream seat into the cavity of the body. The fluid pressure in the chamber is sealed by the seal of the downstream seat formed between the gate and the seat. For gate valves designed with bidirectional sealing when the valve is closed, fluid is maintained on one side of the gate and not allowed to flow into the cavity of the body.

Typically, an actuator is mounted to the valve for operating the gate between open and closed positions of the valve. The actuator may be a hydraulic or an electric actuator. For high pressure applications, such as hydrocarbon production, a seal is maintained between the pressurized portion of the valve and the actuator body. For hydraulic actuators, process fluid may migrate into a pressure compensated cavity enclosing the hydraulic actuator components where the process fluids can then vented to the environment through a safety valve or directly into the hydraulic system for disposal via the hydraulic return line, thereby contaminating the hydraulic fluid. Any build up of excess pressure is typically bled off via a safety valve in the actuator body. For hydraulic actuators this is an undesired yet tolerable condition. However, for electric actuators this condition will result in a devastating pollution of the environment for the electrical components, such as the actuator motor and other components.

A need exists for a technique to improve sealing between the valve and the actuator body in order to protect components within the actuator body.

**Summary of the Invention**

According to the invention from one aspect there is provided apparatus comprising:

a housing;

a body defining a first chamber;

an elongate actuator member mounted for reciprocal movement, at least a part of the member being enclosed by said housing; and

sealing means between said first chamber and a compartment of said housing, said member extending from said housing to said first chamber through the sealing means, wherein:

said sealing means comprises a fluid filled seal chamber enclosing at least a portion of said member and located within said housing, a volume comprising a volume between the seal chamber and the rod remaining substantially constant during movement of the member.

According to the present invention from another aspect, there is provided a method of providing sealing means in apparatus comprising: a housing; a body defining a first chamber; and an elongate actuator member mounted for reciprocal movement, at least a part of the member being enclosed by said housing, the method comprising providing sealing means between said first chamber and a compartment of said housing, said member extending from said housing to said first chamber through the sealing means, wherein said sealing means comprises a fluid filled seal chamber enclosing at least a portion of said member and located at least partially within said housing, a volume comprising a volume between the seal chamber and the member remaining substantially constant during movement of the member.

The fluid in said seal chamber could be a dielectric fluid, a liquid or a grease for example.

The apparatus could comprise a valve (such as a gate valve or a choke valve) wherein:

a flow passage intersects said first chamber; and

a valve opening and closing device is in the first chamber, the member being operably connected to the device to move the device between open and closed positions of the valve.

A valve according to the invention could be a rising stem valve, said member comprising an actuator stem of the valve.

Typically, the apparatus further comprises an actuator within said compartment of the housing for moving said member. The compartment could be in fluid communication with the fluid in said seal chamber.

The fluid filled seal chamber could comprise:

a first bellows, having a first diameter, connected at an end remote from the first chamber to the internal wall of the housing and connected at an opposite end to an annular spacer; and

a second bellows having a second diameter, smaller than the first diameter and located within the diameter of the first bellows and connected at an end to said member for movement therewith, wherein said volume comprises a volume between inner walls of the first bellows, inner walls of the second bellows and an outer surface of the member.

In one embodiment, the second bellows is connected at an end remote from said first chamber to the annular spacer, the second bellows expanding when the member moves in a direction towards the first chamber and contracting when the member moves in the opposite direction.

In another embodiment, the second bellows is connected at an end nearer to said first chamber to the annular spacer, the second bellows contracting when the member moves in a direction towards the first chamber and expanding when the member moves in the opposite direction.

Alternatively, the fluid filled seal chamber could comprise:

a first cylinder having an open end remote from said first chamber and an opposite opening sealingly and slidingly engaging said member;

a second cylinder having a smaller diameter than the first cylinder and located within the second cylinder and connected at an end to the member for movement therewith; and

an annular piston sealingly engaged with an inner wall of the first cylinder and an outer wall of the second cylinder, wherein the annular piston is free to move axially in response to movement of the member and said volume comprises an enclosed volume between an inner wall of the first cylinder, an inner wall of the second cylinder and an outer surface of said member which remains substantially constant.

According to the invention from a further aspect, there is provided a gate valve comprising:

a body with a chamber;

a flow passage having an axis and extending through and having a counterbore intersecting the chamber;

an annular seat carried in the counterbore, the seat having an outward facing seal face;

a gate in the chamber having an engaging face that slidingly engages the seal face on the seat while being moved between open and closed position of the valve;

a stem operably connected to the gate to move the gate between open and closed position of the valve;

a housing having an internal wall and enclosing at least a portion of the stem; and

a fluid filled seal chamber enclosing at least a portion of the stem and located at least partially within the housing, wherein a volume comprising a volume between the seal chamber and the stem remains constant during operation.

According to the invention from yet another aspect, there is provided a gate valve comprising:

a body with a chamber;

a flow passage having an axis and extending through and having a counterbore intersecting the chamber;

an annular seat carried in the counterbore, the seat having an outward facing seal face;

a gate in the chamber having an engaging face that slidingly engages the seal face on the seat while being moved between valve open and closed positions;

a stem operably connected to the gate to move the gate between valve open and closed positions;

a housing having an internal wall and enclosing at least a portion of the stem;

a relatively large diameter bellows connected at an upper end to the internal wall of the housing and connected at a lower end to an annular spacer; and

a relatively small diameter bellows located concentrically within the diameter of the large diameter bellows and connected at an end to the stem for movement therewith, wherein:

the large diameter bellows and small diameter bellows concentrically enclose at least a portion of the stem; and

a fluid filled seal chamber is defined between inner walls of the large diameter bellows, inner walls of the small diameter bellows and an outer surface of the stem, a volume comprising a volume of the seal chamber remaining constant during operation.

Typically, there is an actuator within the housing that operates the stem of the valve, the actuator being located above the large diameter and small diameter bellows.

According to the invention from another aspect, there is provided a method of controlling a flow of a wellbore fluid with a gate valve, comprising:

providing a body with: a chamber; a flow passage having an axis and extending through and having a counterbore intersecting the chamber; an annular seat carried in the counterbore, the seat having an outward facing seal face; a gate in the chamber having an engaging face that slidingly engages the seal face on the seat while being moved between valve open and closed positions; a stem operably connected to the gate to move the gate between valve open and closed positions; a housing having an internal wall and enclosing at least a portion of the stem; a relatively large diameter bellows connected at an upper end to the internal wall of the housing and connected at a lower end to an annular spacer; and a relatively small diameter bellows located concentrically within the large diameter bellows and connected at an end to the stem for movement therewith, wherein the large diameter bellows and the small diameter bellows concentrically enclose at least a portion of the stem and wherein a fluid filled seal chamber is defined between inner walls of large diameter bellows, inner walls of small diameter bellows and an outer surface of the stem, a volume comprising a volume of the seal chamber remaining constant during operation;

flowing wellbore fluid through the flow passage by positioning the gate into a valve open position; and

blocking flow through the flow passage by positioning the gate into a valve closed position, allowing fluid to leak into the chamber from a high pressure side of the valve to thereby pressurize the chamber, wherein the fluid filled seal chamber prevents migration of flow in the chamber past the seal chamber.

In one embodiment of the invention, a rising stem valve has a body with a cavity. An actuator housing that houses actuator components is mounted to the valve for operating an actuator stem. A gate is operably connected to the actuator stem and thus moves upward or downward as the stem is operated. During operation, pressure may build up in the cavity of the valve body. A high pressure seal is located between the actuator stem and the valve body to prevent contamination of the actuator body. A bellows assembly has two bellows of different diameters that are held together by a ring-shaped diaphragm and form a secondary seal from that of the high pressure seal. One end of the bellows assembly is fixed to an internal wall of the actuator housing and the other is fixed to the moveable actuator stem.

The seal chamber between the bellows walls and the stem is filled with a fluid such as liquid or grease and maintains a constant volume regardless of actuator stem position. The bellows automatically adjust to compensate for the variable volume of the actuator stem when it is moved in or out of the actuator housing as well as for the longitudinal extension or compression of the bellows assembly. The bellows assembly may also be self compensating to account for pressure and temperature variations. The constant volume is achieved by the relative movement of the diaphragm during the bellows assembly's extension or compression.

In another embodiment, a large diameter cylinder and a small diameter cylinder are used instead of the bellows assembly. The small diameter cylinder can be attached to the actuator stem, with the larger cylinder attached to the housing and a freely movable piston between the small and large diameter cylinders.

The primary function of the seal chamber is to advantageously provide a second barrier between the production fluids and the interior of an actuator compartment of the housing, the first barrier being the pressure retaining seal of the valve body. A secondary function could be to provide a second barrier between the environment and the actuator compartment (the actuator being an electrical actuator for example), the first one typically being a bladder system that would breathe to the sea. This will provide a two barrier system between the environment and actuator compartment. The two barrier system can thus be based on two different technologies.

## Brief Description of the Drawings

FIG. 1 is a vertical partial sectional view of a rising stem gate valve.

FIG. 2 is a partial sectional view of a portion of a first embodiment of the invention in an open position;

FIG. 3 is a partial sectional view of a portion of the first embodiment in a closed position;

FIG. 4 is a partial sectional view of a portion of a second embodiment of the invention in an open position;

FIG. 5 is a partial sectional view of the second embodiment in a closed position;

FIG. 6 is a partial sectional view of a portion of a third embodiment, based on the first embodiment, in an open position;

FIG. 7 is a partial sectional view of a portion of a fourth embodiment of the invention in an open position; and

FIG. 8 is a partial sectional view of a portion of the fourth embodiment in a closed position.

## Detailed Description of the Invention

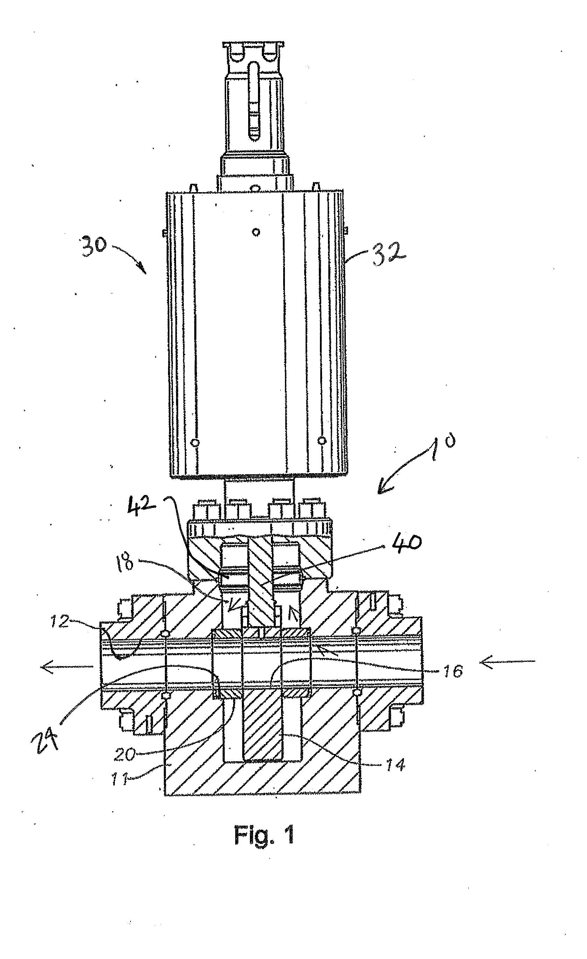

Referring to FIG. 1, a conventional rising stem gate valve 10, is shown. The valve 10 has a body 11 and a flow passage 12 with an axis that extends transversely through body 11. In this embodiment, valve 10 has a valve opening and closing device in the form of a gate 14 with an opening 16 therethrough. Gate 14 is shown with valve 10 in the open position. When valve 10 is in the closed position, gate 14 blocks flow passage 12 to prevent flow. Flow may contain production fluid that may contain hydrocarbons. The gate 14 travels within a chamber in the body 11 in the form of a cavity 18 that is transverse to and intersected by the passage 12. Ring-shaped valve seats 20 are sealingly located against counterbores 24 formed on the body 11. Elastomeric elements may also be used between the seats 20 and counterbores 24 to provide sealing. The seats 20 define openings that register with the flow passage 12 of the valve, which intersects the cavity 18 formed in the valve body 11.

Continuing to refer to FIG. 1, an actuator 30 is shown. The actuator 30 may be hydraulic or electrical and has a housing 32. If actuator 30 is an electrical actuator, housing 32 can house an electrical motor (not shown) and other components, which are surrounded by dielectric fluid. Actuator 30 operates gate 14 between valve open and closed positions. A mechanism involving an elongate actuator member in the form of an actuator rod or stem 40 coupled to the motor and the gate 14 and extending through a high pressure primary seal 42 is described further below. When actuator 30 moves gate 14 to the valve open position by the stem 40 connected to it, the opening 16 of the gate 14 registers with flow passage 12 of the valve 10, thereby allowing flow through the valve 10. When actuator 30 moves the gate 14 to the valve closed position, the opening 16 no longer registers with the flow passage 12 and thus flow is stopped. When the gate 14 is in the valve closed position, flow in cavity 18 is as indicated by arrows on the upstream side of gate 14, pressurizing the cavity 18.

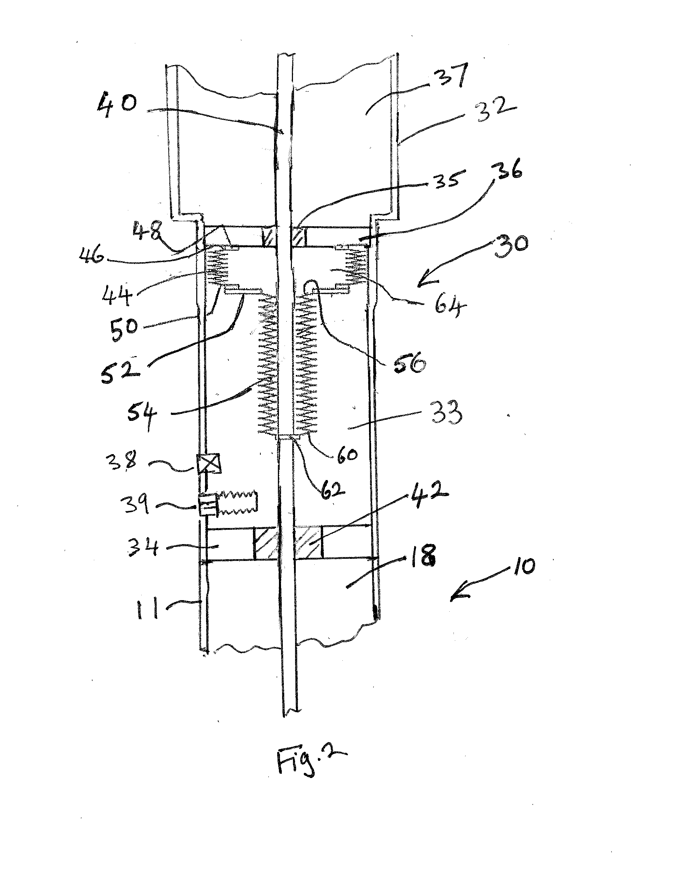

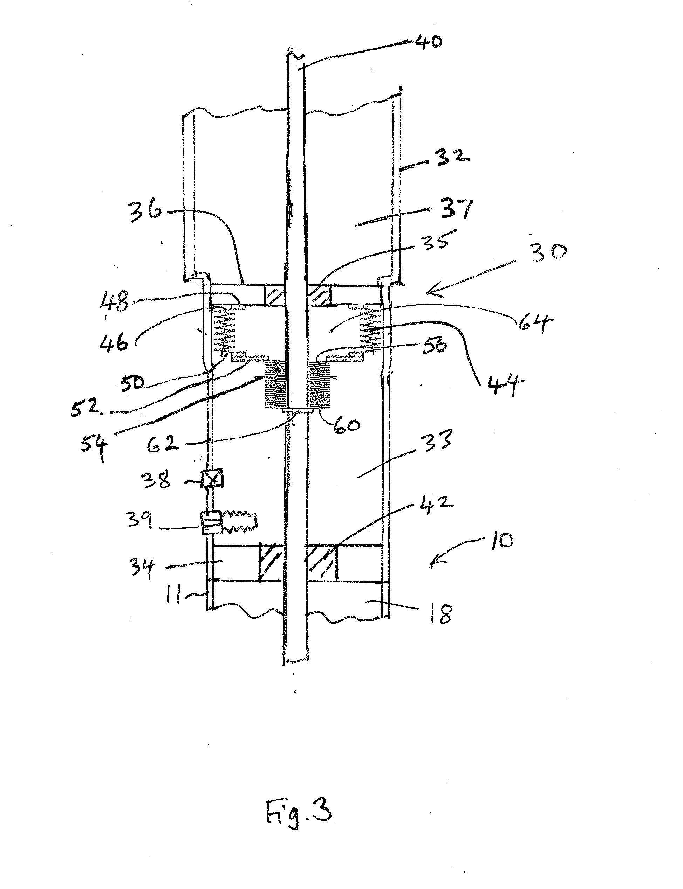

Referring to FIGS. 2 and 3, which show how the valve 10 of FIG. 1 may be configured in accordance with an embodiment of the invention, a sealing mechanism partially located within a seal compartment 33 of actuator housing 32, is shown for an open (FIG. 2) and a closed position (FIG. 3) of valve 10. Further, FIGS. 2 and 3 show actuator stem 40 traversing actuator housing 32 and cavity 18 of valve 10. Actuator stem 40 is coupled to gate 14 (FIG. 1) to operate the gate between valve 10 open and closed positions. Actuator stem 40 extends through seal 42 (which is in a transverse wall 34, seal 42 being a primary seal between cavity 18 and the actuator housing 32) and through a low pressure seal 35 in a transverse wall 36 of housing 32 between seal compartment 33 and an actuator compartment 37 in housing 32. Reference numerals 38 and 39 denote an overpressure relief valve and a bellows-based pressure compensator for compartment 33. In this embodiment, a large diameter bellows 44 is attached at an upper end 46 (remote from cavity 18) to wall 36 via an annular fixture or fastener 48. An opposite, lower end 50 of large diameter bellows 44 is connected to an axially movable annular spacer 52, in the form of a diaphragm for example. A small diameter bellows 54 is concentric with large diameter bellows 44 and connects at an upper end 56 (remote from cavity 18) to annular spacer 52. An opposite, lower end 60 of small diameter bellows 54 is connected to a stem fixture or fastener 62 that is fixed to actuator stem 40. A bellows cavity 64 between the walls of large and small diameter bellows 44, 54 and actuator stem 40 is filled with a fluid such as a liquid or a grease. In this embodiment, bellows cavity 64 maintains a constant volume regardless of the position of actuator stem 40. Referring to FIG. 3, small diameter bellows 54 is compressed when actuator stem 40 is moved up to move gate 14 to the valve 10 closed position, that is in a direction away from cavity 18.

During operation, the set of bellows 44, 54 automatically adjusts to compensate for the variable volume of the actuator stem 40 when the stem is moved in or out of the actuator housing 32 as well as for the longitudinal extension or compression of the set of bellows. The bellows 44, 54 also self-compensate for pressure and temperature variations. Although bellows 44, 54 provide secondary sealing when valve 10 is in the open position shown in FIG. 2, the bellows also provide sealing when the valve 10 is in the closed position of valve 18 and experiences an increase in pressure due to flow of production fluid into cavity 18. A secondary function of the sealing could be to provide a second barrier between the environment and the actuator compartment 37 (which for example houses an electric motor), due to leakage past seal 42, the primary barrier typically being a bladder-type system that can breathe to sea, thus providing a two barrier system between the environment and compartment 37.

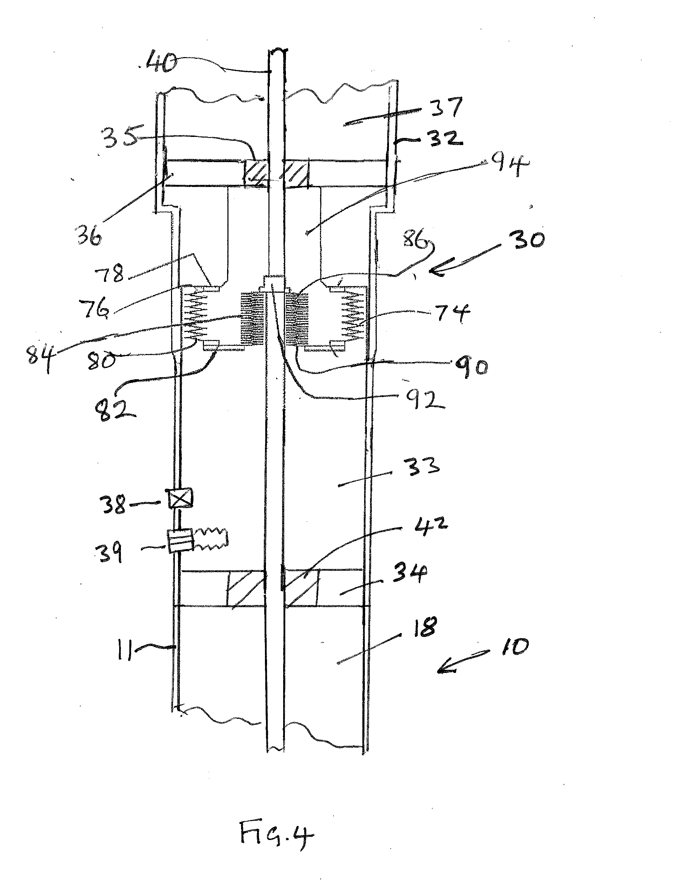

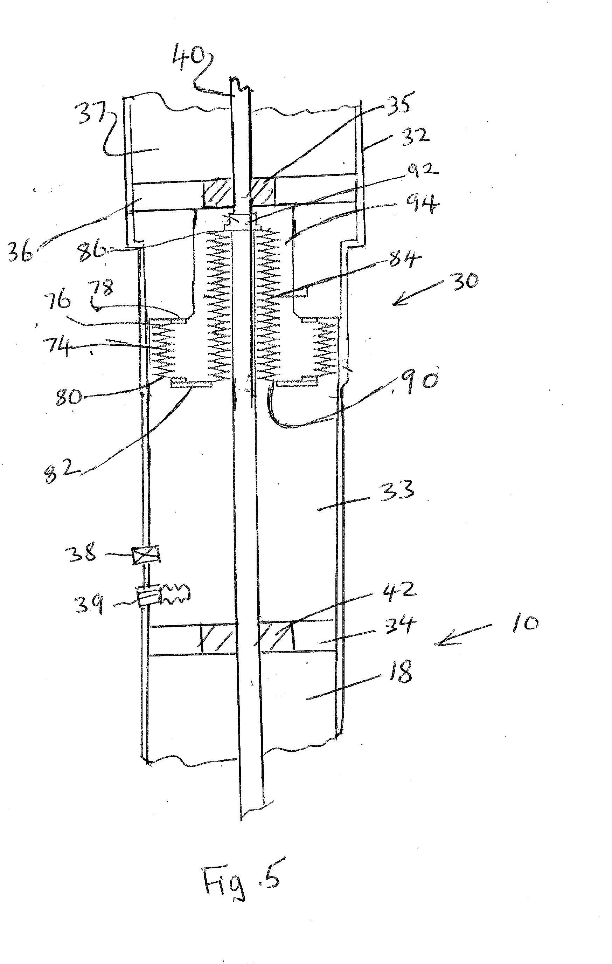

In another embodiment, shown in FIGS. 4 and 5 (in which items which correspond with items in FIGS. 2 and 3 have the same reference numerals as in FIGS. 2 and 3), a sealing mechanism located within seal compartment 33 of actuator housing 32 is shown for a valve open (FIG. 4) and a valve closed position (FIG. 5). This sealing mechanism is similar to the arrangement shown in FIGS. 2 and 3 with the exception of the location of the bellows as described below. FIG. 4 shows actuator stem 40 traversing actuator housing 32 and cavity 18 of valve 10. Actuator stem 40 is coupled to gate 14 (FIG. 1) to operate the gate between valve 10 open and closed positions. In this embodiment, a large diameter bellows 74 is attached at an upper end 76 to wall 36 via an annular fixture or fastener 78. A lower end 80 of large diameter bellows 74 is connected to an annular spacer 82 in the form of a diaphragm for example. Small diameter bellows 84 is concentric with large diameter bellows 74 and is located within large diameter bellows. Further, small diameter bellows 84 connects at an upper end 86 to a fixture 92, which is fixed to actuator stem 40. A lower end 90 of small diameter bellows 84 (nearer cavity 18) is connected to an inner portion of annular spacer 82. A bellows cavity 94 between the walls of large and small diameter bellows 74, 84 and actuator stem 40 is filled with a fluid such as a liquid or a grease. In this embodiment, bellows cavity 94 maintains a constant volume regardless of the position of actuator stem 40. Referring to FIG. 5, small diameter bellows 84 is expanded when actuator stem 40 is moved up to move gate 14 to the valve 10 closed position, that is in a direction away from cavity 18.

During operation, the set of bellows 74, 84 automatically adjusts to compensate for the variable volume of the actuator stem 40 when the stem is moved in or out of the actuator housing 32 as well as for the longitudinal extension or compression of the set of bellows. The bellows 74, 84 also self-compensate for pressure and temperature variations. Although bellows 74, 84 provide secondary sealing in the position shown in FIG. 4, the bellows also provide sealing in the closed position of valve 10 when cavity 18 experiences an increase in pressure due to flow of production fluid into the cavity. As previously explained, a secondary function of sealing could be to provide a secondary barrier between the environment and the actuator compartment 37 (for example housing an electric motor), due to leakage through seal 42, the primary barrier typically being a bladder-type system that can breathe to sea to provide a two barrier system between the environment and the actuator compartment.

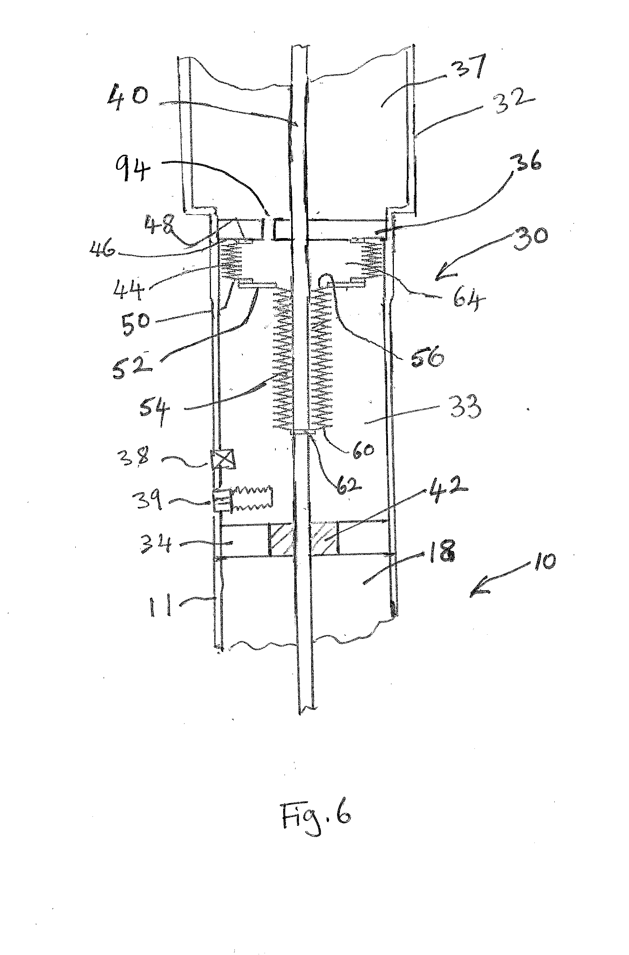

Referring to FIG. 6, in a further embodiment which is a modified version of the embodiment of FIGS. 2 and 3, fluid inside the bellows seal is in fluid connection with the actuator compartment 37 via a flow path 94 in wall 36, seal 35 not being present. Not only does this embodiment provide sealing as with the embodiment of FIG. 2, it also acts as a pressure and temperature compensator for the actuator compartment 37 (which could be an electric motor compartment). However, in this embodiment, it is the volume of the bellows cavity 64 and the volume of the actuator compartment that remains constant during movement of stem 40. It will be appreciated that the embodiment of FIGS. 4 and 5 could likewise be modified.

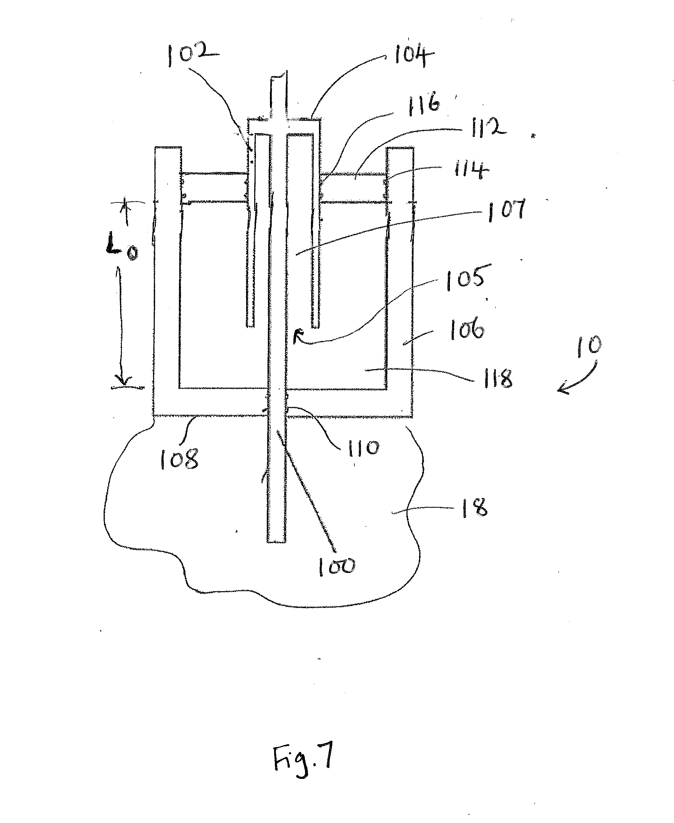

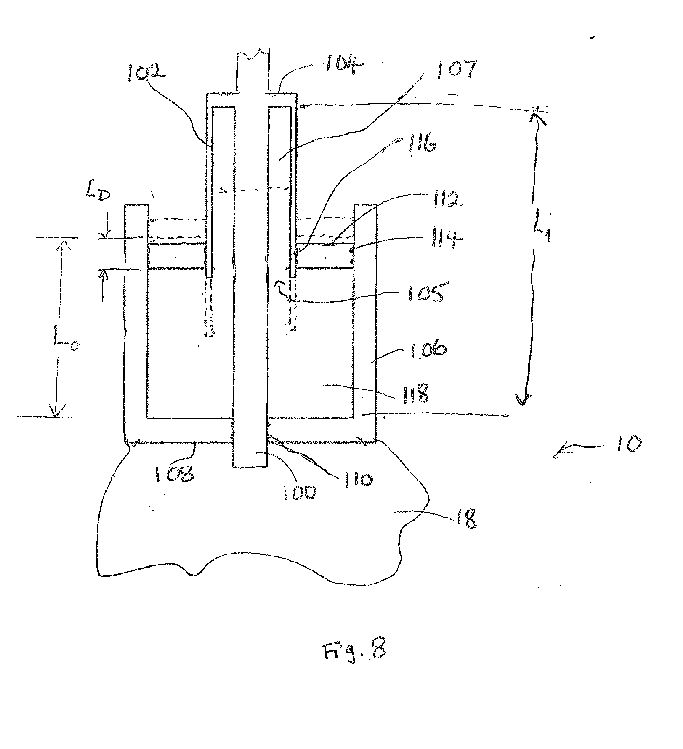

In another embodiment shown in FIGS. 7 and 8, cylinders are used instead of bellows. FIG. 7 shows an actuator stem 100 attached to a small diameter cylinder 102, the valve 10 being in the open position. FIG. 8 shows the actuator stem in the valve 10 closed position. Small diameter cylinder 102 has a closed upper end 104 with a lower opening 105. Stem 100 connects to an inner upper portion of small diameter cylinder 102. Lower opening 105 of small diameter cylinder 102 together with actuator stem 100 define a cavity 107 within the small diameter cylinder. Small diameter cylinder 102 is located within and axially movable relative to a large diameter cylinder 106. Large diameter cylinder 106 has an open upper end (remote from cavity 18) and a closed lower end 108 with a passage 110 to allow actuator stem 100 to traverse cavity 18 of valve 10. Large diameter cylinder 106 may also function as an actuator housing. Passage 110 may be sealed to provide a first seal against process fluids in valve cavity 18. An annular piston 112 (acting as a diaphragm) is located between the small and large diameter cylinders 102, 106 for free axial movement relative to both. Outer and inner seals 114, 116 seal between annular piston 112 outer and inner surfaces and large and small diameter cylinders 106, 102, respectively. A large diameter cavity 118 is defined by large diameter cylinder 106, small diameter cylinder 102 and annular piston 112. Annular piston 112 and small diameter cylinder 102 can move axially relative to large diameter cylinder 106. In this embodiment, large diameter cavity 118 and small diameter cavity 107 are filled with a fluid such as a liquid or a grease. As in the previous embodiments, a secondary function of sealing could be to provide a second barrier between the environment and the inside of the actuator.

During operation, the small diameter cylinder 102 and annular piston 112 move to automatically adjust to compensate for the variable volume in large diameter cylinder 106 caused when actuator stem 100 is moved in or out of large diameter cylinder, which may function as an actuator housing. The annular piston 112 also self-compensates for pressure and temperature variations. Although the arrangement of small diameter cylinder 102, annular piston 112 and large diameter cylinder 106 provides secondary sealing in the open position of valve 10 shown in FIG. 7, the arrangement also provides sealing in the closed position of valve 10 when cavity 18 experiences an increase in pressure due to flow of production fluid into the cavity.

The movement of the annular piston 112 can be depicted by Ld shown in FIG. 7 and is given by the following equation:

$$L_d = \frac{(V_t - A_{small} * P_{final\ stem})}{A_{large}} - P_{initial\ diaphragm}$$

Where:

- $V_t$ is defined as the total volume, which is the constant volume of the large diameter cylinder 106 assembly less the volume of the actuator stem 100.
- $A_{small}$ is defined as the active area of the small diameter cylinder 102, which is the footprint of the area between the stem 100 and the small cylinder 102.
- $A_{large}$ is defined as the active area of the large diameter cylinder 106, which is the footprint of the area between the large and small diameter cylinders 106, 102, identical to the footprint of the annular piston 112.
- $P_{initial\ diaphragm}$ is defined as the initial position of the annular piston 112, which is the distance from a reference point at the bottom of large diameter cylinder 106 to the annular piston 112 prior to the actuator stem movement, illustrated by $L_0$ in Fig. 7.
- $P_{final\ stem}$ is defined as the final position of the stem 100, which is the distance from the reference point described above to top end 104 of the small diameter cylinder 102 after the stem movement illustrated by $L_1$ in Fig. 8.

If the reference point is chosen as the initial position of the diaphragm, $P_{initial\ diaphragm}$ is zero and $P_{final\ stem}$ is equal to the stem movement so the equation above means that the diaphragm moves in the opposite direction to that of the stem.

The above equation is valid for cylinders and bellows and is independent of the configuration of the bellows. The effect is identical for bellows mounted as one extending from the other or being mounted inside one another, as shown in the above embodiments. In the embodiments of FIGS. 2 and 3 and FIGS. 4 and 5, when stem 40 moves, the spacer 52 or 82 moves in the opposite direction to that of stem 40. As previously explained, the primary function of the sealing arrangement is to provide a second barrier between the production fluids and the interior of actuator, the first barrier being a pressure retaining seal of the valve body.

**Claims**

1. Apparatus comprising:

   a housing;
   a body defining a first chamber;
   an elongate actuator member mounted for reciprocal movement, at least a part of the member being enclosed by said housing; and
   sealing means between said first chamber and a compartment of said housing, said member extending from said housing to said first chamber through the sealing means, wherein:

   said sealing means comprises a fluid filled seal chamber enclosing at least a portion of said member and located at least partially within said housing, a volume comprising a volume between the seal chamber and the member remaining substantially constant during movement of the member.

2. Apparatus according to claim 1 comprising a valve, wherein:

   a flow passage intersects said first chamber; and
   a valve opening and closing device is in the first chamber, the member being operably connected to the device to move the device between open and closed positions of the valve.

3. Apparatus according to claim 2, wherein the valve is a rising stem valve, said member comprising an actuator stem of the valve.

4. Apparatus according to any preceding claim, further comprising an actuator within said compartment of the housing for moving the member.

5. Apparatus according to any preceding claim, wherein the housing has an internal wall defining said compartment.

6. Apparatus according to claim 5, wherein the fluid filled seal chamber comprises:

   a first bellows, having a first diameter, connected at an end remote from the first chamber to the internal wall of the housing and connected at an opposite end to an annular spacer; and
   a second bellows having a second diameter, smaller than the first diameter and located within the diameter of the first bellows and connected at an end to the member for movement therewith, wherein said volume comprises a volume between inner walls of the first bellows, inner walls of the second bellows and an outer surface of said member.

7. Apparatus according to claim 6, wherein the second bellows is connected at an end remote from said first chamber to the annular spacer, the second bellows expanding when the member moves in a direction towards the first chamber and contracting when the member moves in the opposite direction.

8. Apparatus according to claim 6, wherein the second bellows is connected at an end nearer said first chamber to the annular spacer, the second bellows contracting when the member moves in a direction towards the first chamber and expanding when the member moves in the opposite direction.

9. Apparatus according to claim 5 or any of claims 6 to 8 as dependent on claim 5, wherein said internal wall is transverse said housing and separates said compartment of the housing from a seal compartment of the housing, the seal chamber being in said seal compartment.

10. Apparatus according to any of claims 1 to 4, wherein the fluid filled seal chamber comprises:

   a first cylinder having an open end remote from said first chamber and an opposite opening sealingly and slidingly engaging said member;
   a second cylinder having a smaller diameter than the first cylinder and located within the second cylinder and connected at an end to the member for movement therewith; and
   an annular piston sealingly engaged with an inner wall of the first cylinder and an outer wall of the second cylinder, wherein the annular piston is free to move axially in response to movement of the member and said volume comprises an enclosed volume between an inner wall of the first cylinder, an inner wall of the second cylinder and an outer surface of said member which remains substantially constant.

11. A method of providing sealing means in apparatus comprising: a housing; a body defining a first chamber; and an elongate actuator member mounted for reciprocal movement, at least a part of the member being enclosed by said housing, the method comprising providing sealing means between said first chamber and a compartment of said housing, said member extending from said housing to said first chamber through the sealing means, wherein said sealing means comprises a fluid filled seal chamber enclosing at least a portion of said member and located within said housing, a volume comprising a volume between the seal chamber and the member remaining substantially constant during movement of the member.

12. A method according to claim 11, wherein the apparatus comprises a valve, wherein:

a flow passage intersects said first chamber; and
a valve opening and closing device is in the first chamber, the member being operably connected to the device to move the device between open and closed positions of the valve.

13. A method according to claim 12, wherein the valve is a rising stem valve, said member comprising an actuator stem of the valve.

14. A method according to any of claims 11 to 13, wherein an actuator is provided within said compartment of the housing for moving the actuator member.

15. A method according to any of claims 11 to 14, wherein the housing has an internal wall defining said compartment.

16. A method according to claim 15, wherein the fluid filled seal chamber comprises:

a first bellows, connected at an end remote from the first chamber to the internal wall of the housing and connected at an opposite end to an annular spacer; and
a second bellows having a smaller diameter than the first bellows and located within the diameter of the first bellows and connected at an end to said member for movement therewith, wherein said volume comprises a volume between inner walls of the first bellows, inner walls of the second bellows and an outer surface of said member.

17. A method according to claim 16, wherein the second bellows is connected at an end remote from the first chamber to the annular spacer, the second bellows expanding when said member moves in a direction towards the first chamber and contracting when the member moves in the opposite direction.

18. A method according to claim 16, wherein the second bellows is connected at an end nearer to the first chamber to the annular spacer, the second bellows contracting when said member moves in a direction towards the first chamber and expanding when the member moves in the opposite direction.

19. A method according to claim 15 or any of claims 16 to 18 as dependent on claim 15, wherein said internal wall is transverse said housing and separates said compartment of the housing from a seal compartment of the housing, the seal chamber being in said seal compartment.

20. A method according to any of claims 11 to 14, wherein the fluid filled seal chamber comprises:

a first cylinder having an open end remote from said first chamber and an opposite opening sealingly and slidingly engaging said member;
a second cylinder having a smaller diameter than the first cylinder and located within the second cylinder and connected at an end to the member for movement therewith; and
an annular piston sealingly engaged with an inner wall of the first cylinder and an outer wall of the second cylinder, wherein the annular piston is free to move axially in response to movement of the member and said volume comprises an enclosed volume between an inner wall of the first cylinder, an inner wall of the second cylinder and an outer surface of said member which remains substantially constant.

Fig. 1

EP 2 581 635 A1

Fig. 2

11

Fig.3

Fig.4

Fig. 5

Fig.6

Fig. 7

Fig. 8

Europäisches
Patentamt

European
Patent Office

Office européen
des brevets

## EUROPEAN SEARCH REPORT

Application Number

EP 11 18 5294

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 880 620 A (BREDTSCHNEIDER KURT B) 7 April 1959 (1959-04-07) * figure 1 * * column 2, line 31 - line 38 * ----- | 1,6,7, 16,17 | INV. F16K41/10 |
| X | GB 891 352 A (DISTILLERS CO YEAST LTD) 14 March 1962 (1962-03-14) * figure 1 * * page 2, line 25 - line 27 * ----- | 1-20 | |
| X | GB 2 041 172 A (ELEKTROWATT AG) 3 September 1980 (1980-09-03) * abstract; figure 1 * ----- | 1-20 | |
| X | FR 2 071 531 A5 (COMMISSARIAT ENERGIE ATOMIQUE) 17 September 1971 (1971-09-17) * figure 1 * * page 2, line 24 - line 25 * ----- | 1-20 | |
| X | GB 847 783 A (PFORZHEIM METALLSCHLAUCH) 14 September 1960 (1960-09-14) * figure 6 * ----- | 1-20 | TECHNICAL FIELDS SEARCHED (IPC) F16K |
| A | DE 87 10 327 U1 (SIEPMANN-WERKE) 8 October 1987 (1987-10-08) * figure 1 * ----- | 1-20 | |

The present search report has been drawn up for all claims

| Place of search | Date of completion of the search | Examiner |
|---|---|---|
| Munich | 28 March 2012 | Bilo, Eric |

EPO FORM 1503 03.82 (P04C01)

## ANNEX TO THE EUROPEAN SEARCH REPORT
## ON EUROPEAN PATENT APPLICATION NO.

EP 11 18 5294

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2012

| Patent document cited in search report | | | Publication date | Patent family member(s) | | | Publication date |
|---|---|---|---|---|---|---|---|
| US 2880620 | A | | 07-04-1959 | NONE | | | |
| GB 891352 | A | | 14-03-1962 | NONE | | | |
| GB 2041172 | A | | 03-09-1980 | CH | 638327 | A5 | 15-09-1983 |
| | | | | DE | 3001834 | A1 | 31-07-1980 |
| | | | | GB | 2041172 | A | 03-09-1980 |
| | | | | SE | 433966 | B | 25-06-1984 |
| | | | | SE | 8000148 | A | 27-07-1980 |
| FR 2071531 | A5 | | 17-09-1971 | NONE | | | |
| GB 847783 | A | | 14-09-1960 | NONE | | | |
| DE 8710327 | U1 | | 08-10-1987 | NONE | | | |

EPO FORM P0459

For more details about this annex : see Official Journal of the European Patent Office, No. 12/82